# EUROPEAN PATENT APPLICATION

(11) **EP 4 507 338 A1**
(43) Date of publication of application: **12.02.2025**
(21) Application number: 23190809.6
(22) Date of filing: 10.08.2023
(51) Int. Cl.: H04W 4/02, G01S 5/00, H04W 4/46, G01S 5/14, G01S 5/02

(54) **RADIO TERMINALS OF A SIDELINK POSITIONING PROCEDURE, AND METHODS TO OPERATE SAID RADIO TERMINALS**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

There is provided a method to operate a server radio terminal (UE#1) of a sidelink positioning procedure (SLP), the method comprising: receiving, via the sidelink channel, and/or determining (104) at least one first sidelink measurement report (MES#1), wherein the first sidelink measurement report (MES#1) comprises first relative position information that indicates a relative position and a relative orientation of a first anchor radio terminal (UE#3) of the sidelink positioning procedure with respect to the server radio terminal (UE#1); receiving (108), via a sidelink channel, a first absolute position information (AP#3) that indicates an absolute position and an absolute orientation of the first anchor radio terminal (UE#3).

## Description

### Prior Art

The use of sidelink positioning in the context of V2X is a promising technology in the field of intelligent transportation systems. This technology aims to provide accurate and reliable location information to vehicles and infrastructure devices for improved safety and efficiency on the roads. With the increasing number of connected vehicles and the growing demand for real-time information exchange, sidelink positioning is gaining traction as a key solution for V2X communication.

### Disclosure of the invention

The problems of the prior art are solved by radio terminals and methods to operate said radio terminals according to the independent claims.

An aspect of the description is directed to the following subject matter: A server radio terminal of a sidelink positioning procedure the server radio terminal comprising at least one processor; at least one memory including computer program code; and at least one radio communication module; the at least one processor, the at least one memory, the at least one computer program code, and the at least one radio communications module cause the server radio terminal to perform at least: receiving, via the sidelink channel, and/or determining at least one first sidelink measurement report, wherein the first sidelink measurement report comprises first relative position information that indicates a relative position and a relative orientation of a first anchor radio terminal of the sidelink positioning procedure with respect to the server radio terminal; receiving, via a sidelink channel, a first absolute position information that indicates an absolute position and an absolute orientation of the first anchor radio terminal; receiving, via the sidelink channel, and/or determining at least one second sidelink measurement report, wherein the second sidelink measurement report comprises relative position information that indicates a relative position and a relative orientation of a second anchor radio terminal of the sidelink positioning procedure with respect to the server radio terminal; and receiving, via the sidelink channel, a second absolute position information that indicates an absolute position and an absolute orientation of the second anchor radio terminal of the sidelink positioning procedure.

By obtaining the absolute position information of two or more anchor UEs sidelink positioning information can be transformed from relative positions to absolute positions. Therefore, a sidelink positioning procedure is able to exploit the absolute positions of anchor UEs to perform absolute positioning of a target UE, especially in the case when the server UE has no absolute positioning capabilities. In other words, the scheme make use of the available absolute position and the sidelink relative positioning capabilities enabling a provision of an absolute position for the target UE.

An advantageous example is characterized in that the server radio terminal further performs: transmitting, via the sidelink channel or an uplink channel, the first absolute position information, the first relative position information of the first measurement report, the second absolute position information, and the second relative position information of the second measurement report.

Advantageously, the receiving entity is able to determine position and orientation of the server radio terminal.

An advantageous example is characterized in that the server radio terminal further performs: determining absolute position information comprising an absolute position and absolute orientation of the server radio terminal based on: the first absolute position information, the first relative position information of the first measurement report, the second absolute position information, and the second relative position information of the second measurement report.

In realistic scenarios, roadside units, RSUs, and/or fixed anchor UEs with known positions may be allocated along a line, e.g., along highways, tunnels, railways, etc. In order to overcome the dilution of positioning due to the effect of this linear allocation of anchors, free stationing can be a supportive for positioning calculations, which may rely on at least two anchors at a time to conclude the measurements.

The scheme is particularly advantageous when a group of UEs is subject to a sidelink positioning procedure as a target UE, as the server UE can perform the positioning in a relative coordinate system and then transform this coordinate system in an absolute coordinate system using the own absolute position information.

An advantageous example is characterized in that the server radio terminal further performs: receiving, via the sidelink channel, and/or determining at least one third sidelink measurement report, the third sidelink measurement report comprises relative position information that indicates a relative position and a relative orientation of the server radio terminal with respect to a target radio terminal of the sidelink positioning procedure; and determining a third absolute position information that indicates an absolute position and an absolute orientation of the target radio terminal participating in the sidelink positioning procedure based on the determined absolution position information of the server radio terminal and based on the third sidelink measurement report.

Advantageously, the absolute position and orientation of the server UE and the relative position and orientation are sufficient to obtain the absolute position and orientation of the target UE.

An advantageous example is characterized in that the server radio terminal further performs: receiving, via the sidelink channel, at least one further measurement report, at least one further measurement report comprises relative position information that indicates a relative position and a relative orientation of one of the anchor radio terminals, which are able to provide their absolute position, with respect to the target radio terminal of the sidelink positioning procedure.

Advantageously, the at least one further measurement report enables the server UE to refine its own absolute position information and the absolute position information of the target UE.

An advantageous example is characterized in that the server radio terminal further performs: receiving, via the sidelink channel, at least one motion information indicating a motion parameter of the target radio terminal; wherein the determining of the absolute position information of the target radio terminal is further based on the received at least one motion information.

Advantageously, highly mobile target radio terminals can be located more precisely if the motion parameters are known at the time of the location determination. The known motion parameter can compensate a displacement happening between the transmission of the at least one motion information and determination of the position information associated with the target radio terminal.

An aspect of the description is directed to the following subject matter: A method to operate a server radio terminal of a sidelink positioning procedure the method comprising: receiving, via the sidelink channel, and/or determining at least one first sidelink measurement report, wherein the first sidelink measurement report comprises first relative position information that indicates a relative position and a relative orientation of a first anchor radio terminal of the sidelink positioning procedure with respect to the server radio terminal; receiving, via a sidelink channel, a first absolute position information that indicates an absolute position and an absolute orientation of the first anchor radio terminal; receiving, via the sidelink channel, and/or determining at least one second sidelink measurement report, wherein the second sidelink measurement report comprises relative position information that indicates a relative position and a relative orientation of a second anchor radio terminal of the sidelink positioning procedure with respect to the server radio terminal; and receiving, via the sidelink channel, a second absolute position information that indicates an absolute position and an absolute orientation of the second anchor radio terminal of the sidelink positioning procedure.

An aspect of the description is directed to the following subject matter: An anchor radio terminal of a sidelink positioning procedure the anchor radio terminal comprising at least one processor; at least one memory including computer program code; and at least one radio communication module; the at least one processor, the at least one memory, the at least one computer program code, and the at least one radio communications module cause the anchor radio terminal to perform at least: determining and transmitting, via a sidelink channel, at least one sidelink measurement report, wherein the sidelink measurement report comprises relative position information that indicates a relative position and a relative orientation of the anchor radio terminal of the sidelink positioning procedure with respect to a server radio terminal; a-priori knowing absolute position information that indicates an absolute position and an absolute orientation of the anchor radio terminal; and transmitting, via a sidelink channel, the absolute position information towards the server radio terminal of the sidelink positioning procedure.

Advantageously, the relative and absolute position information is provided to the server radio terminal in order to determine the position information of the target radio terminal. The knowledge of the absolute positions is exploited.

An advantageous example is characterized in that the anchor radio terminal further performs: receiving, via the sidelink channel, an absolute position provision request; the absolute position information is transmitted as a response to the received absolute position provision request.

Advantageously, the decision on providing the absolute position information remains with the server UE in order to reduce unnecessary information transmission overhead.

An aspect of the description is directed to the following subject matter: A method to operate an anchor radio terminal of a sidelink positioning procedure, the method comprising: determining and transmitting, via a sidelink channel, at least one sidelink measurement report, wherein the sidelink measurement report comprises relative position information that indicates a relative position and a relative orientation of the anchor radio terminal of the sidelink positioning procedure with respect to a server radio terminal; a-priori knowing absolute position information that indicates an absolute position and an absolute orientation of the anchor radio terminal; and transmitting, via a sidelink channel, the absolute position information towards the server radio terminal of the sidelink positioning procedure.

An aspect of the description is directed to the following subject matter: A target radio terminal of a sidelink positioning procedure, the target radio terminal comprising at least one processor; at least one memory including computer program code; and at least one radio communication module; the at least one processor, the at least one memory, the at least one computer program code, and the at least one radio communications module cause the target radio terminal to perform at least: transmitting, via a sidelink channel, towards a server radio terminal at least one motion information indicating a motion parameter of the target radio terminal.

Advantageously, highly mobile target radio terminals can be located more precisely if the motion parameters are known at the time of the location determination. The known motion parameter can compensate a displacement happening between the transmission of the at least one motion information and determination of the position information associated with the target radio terminal.

An aspect of the description is directed to the following subject matter: A method to operate a target radio terminal of a sidelink positioning procedure the method comprising: transmitting, via a sidelink channel, towards a server radio terminal at least one motion information indicating a motion parameter of the target radio terminal.

An aspect of the description is directed to the following subject matter: A use of the method according to one of the previous aspects.

According to a further aspect of the invention there is provided a computer program comprising instructions to cause the server radio terminal, or its embodiments, to execute the steps of the above-mentioned method to operate the server radio terminal, or its embodiments, and/or to cause the anchor radio terminal to execute the steps of the above-mentioned method to operate the anchor radio terminal, or its embodiments, and/or to cause the target radio terminal to execute the steps of the above-mentioned method to operate the target radio terminal, or its embodiments. Moreover, there is provided a computer-readable having stored thereon the above-mentioned computer program.
- Figure 1: depicts a schematic sequence diagram to operate a radio communications network;
- Figure 2: depicts a real-world example in a schematical drawing; and
- Figure 3: depicts radio terminals in a schematic block diagram.

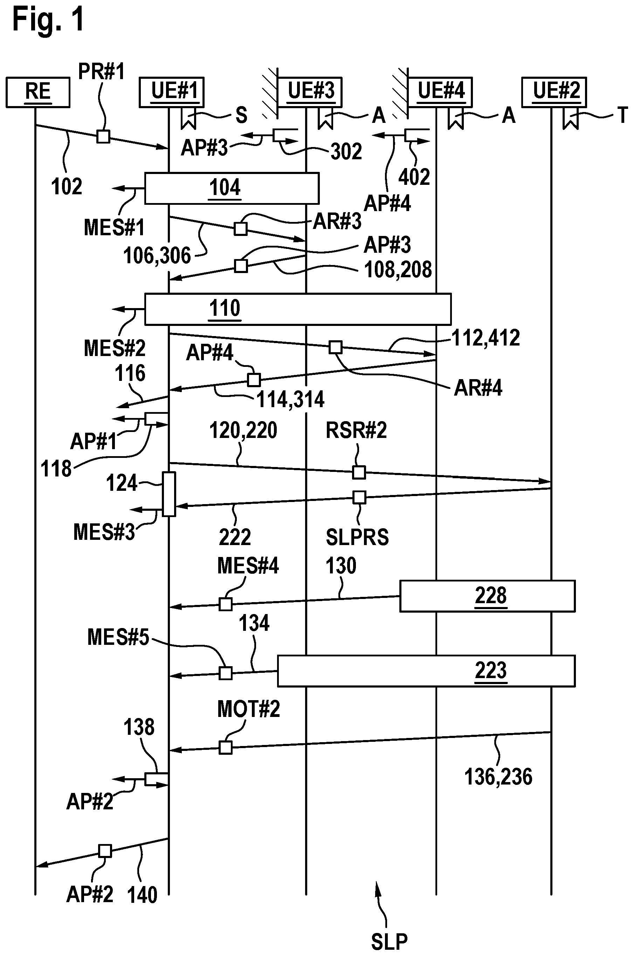

Figure 1 depicts a schematic sequence diagram to operate a radio communications network. A server radio terminal UE#1 of a sidelink positioning procedure SLP receives a positioning request PR#1 indicating a sidelink positioning procedure with a target UE#2. The target role T is dedicated to the radio terminal UE#2 in order to determine the position of UE#2. UE#1 has a server role S indicating that the server radio terminal UE#1 is responsible for gathering the information of the sidelink positioning procedure SLP. Two anchor radio nodes UE#3-4 are, for example, selected by the server radio terminal UE#1. In other words, the selection of the radio terminals UE#1-4 with regard to the server role S and the anchor roles A are a preset for the following description. In addition, the anchor radio terminals UE3-4 have been selected due to their capability to transmit their own absolute position and absolute orientation.

UE#3-4 a-priori knows 302, 402 its absolute position information AP#3-4 that indicates an absolute position and an absolute orientation of the anchor radio terminal UE#3-4. AP#3-4 is stored on a non-transitory memory of UE#3-4.

transmitting 208, 314, via a sidelink channel, the absolute position information AP#3-4 towards the server radio terminal UE#1 of the sidelink positioning procedure SLP.

According to blocks 104, 110, UE#1 receives, via the sidelink channel, and/or determines sidelink measurement reports MES#1-2, wherein the respective sidelink measurement report MES#1-2 comprises relative position information that indicates a relative position and a relative orientation of the anchor radio terminal UE#3-4 with respect to the server radio terminal UE#1. The sidelink positioning measurements yield distances and angles toward the server radio terminal UE#1.

UE#1 can initiate UE#3-4 to transmit sidelink positioning reference signals towards UE#1, so that UE#1 can determine the first measurement report. Alternatively or additionally, UE#3-4 receive sidelink positioning reference signals from UE#1, determines the at least one measurement report MES#1, and transmits the at least one measurement report ME#1 towards the server radio terminal UE#1.

UE#1 receives 108, 114, via the sidelink channel, absolute position information AP#3-4 that indicates a respective absolute position and a respective absolute orientation of the first or second anchor radio terminal UE#3-4 of the sidelink positioning procedure SLP. UE#1 transmits 106, 112 a request AR#3-4 to obtain the absolute position information AP#3-4.

UE#1 determines 118 its absolute position information AP#1 comprising an absolute position and absolute orientation of the server radio terminal UE#1. The determination 118 is based on: the first absolute position information AP#3 of the first anchor radio terminal UE#3, the first relative position information of the first measurement report MES#1 associated with the first anchor radio terminal UE#3, the second absolute position information AP#4 of the second anchor radio terminal UE#3, and the second relative position information of the second measurement report MES#2 associated with the second anchor radio terminal UE#4.

Upon knowing its own absolute position information AP#1, the server radio terminal UE#1 is able to attend request from other UEs requesting their absolute positions to the server radio terminal UE#1. Then the server radio terminal UE#1 determines the relative position of all target UEs with respect to itself in a group positioning procedure. The server radio terminal UE#1 then transforms the relative positions to absolute positions thanks to its now known absolute position and its orientation according to the absolute position information AP#1.

The determination 118 is based, for example, on free stationing. Directions and distances to the anchor radio terminals UE#3-4 with known absolute coordinates are measured using sidelink positioning reference signals and determining the respective measurement report. The calculation of the absolute coordinates of UE#1 takes place from the measured polar coordinates (directions and distances) to the radio terminals UE#3-4. There is determines the translation of the UE#1 standpoint, the rotation of the pitch circle with respect to the coordinate system of UE#3-4 and a scale.

If more than two anchor UEs like UE#3 and UE#4 are available, an overdetermined Helmert transformation can be used for determining the absolute position information of UE#1.

The server radio terminal UE#1 transmits 120 a reference signal request RSR#2 towards the target radio terminal UE#1. Upon reception 220 of the RSR#2, UE#2 starts to transmit 222 sidelink positioning reference signals SLPRS towards UE#1. UE#1 listens 124 to the SLPRS signals and determines the measurement report MES#3 with positioning information that reflect a relative distance and relative orientation of UE#1 and UE#2. Alternatively or additionally, the measurement report MES#3 is determined at the side of UE#2 based on sidelink positioning reference signals received from UE#1, and UE#2 transmits the MES#3 towards UE#1.

Based on transmission and reception of sidelink positioning reference signals between UE#2 and UE#4, a measurement report MES#4 is determined 228 and conveyed 130 to UE#1.

Based on transmission and reception of sidelink positioning reference signals between UE#2 and UE#3, a measurement report MES#5 is determined 223 and conveyed 134 to UE#1.

Furthermore, the target radio terminal UE#2 transmits 236, via the sidelink channel, at least one motion information MOT#2 indicating a motion parameter of the target radio terminal UE#2; and
UE#1 determines 138 the absolute position information AP#2 of the target radio terminal UE#2 based at least on the absolute position information AP#1 of the server radio terminal UE#1 and based on the relative position information that is part of the measurement report MES#3.

According to an example, at least one or a plurality of the measurement reports MES#3-4 are a basis for the determination 138 of the absolute position information AP#2. MES#3-4 can be combined with MES#1-2 for triangulation purposes.

According to an example, the determination 138 of the absolute position information AP#2 of the target radio terminal UE#2 on received at least one motion information MOT#3 indicating a movement of the target radio terminal UE#2.

The motion information MOT#2-3 can includes a parameter like a speed and/or heading of UE#2 or the target radio terminal UE#3. Therefore, the movement of the radio terminal UE#2, UE#3 at the time of the transmission of the the motion information MOT#2-3 is captured by the motion information MOT#2-3. In that sense, the motion information MOT#2-3 is a static representation of the movement of UE#2-3 at the time of transmission of MOT#2-3. Of course, MOT#2-3 can be also included in one of the measurement reports MES#3-4.

Each one of the measurement reports MES#1-5 comprises a distance between the associated radio terminals or a corresponding value, and an angle of arrival associated with the measured angle at least one sidelink positioning reference signal arrives at the measuring radio terminal.

After determination 138 of the absolute position information AP#2, UE#1 transmits 140 the absolute position information AP#2 towards the requesting entity RE.

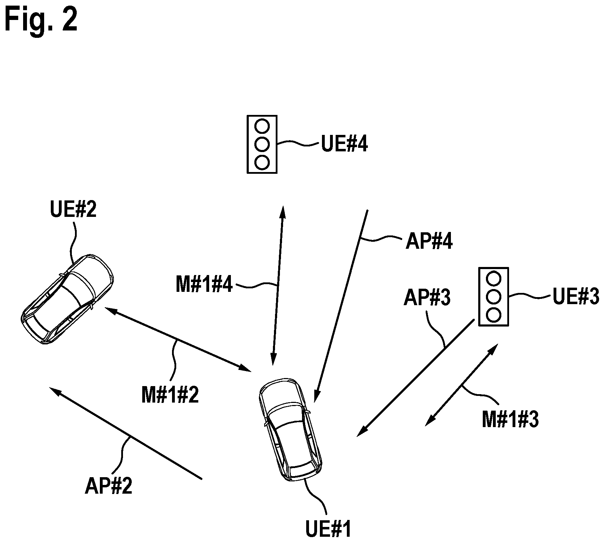

Figure 2 depicts a real-world example in a schematical drawing. The server radio terminal UE#1 and the target radio terminal UE#2 are bound to vehicles. The anchor radio terminals UE#3-4 are bound to fixed road infrastructure apparatuses like traffic lights. As outlined above, the server radio terminal UE#3 is able to provide to the target radio terminal UE#2 its absolute position AP#2 by combining the following measures: obtaining the absolute positions AP#3 and AP#4 of the anchor radio terminals UE#3-4, and by obtaining relative sidelink measurements M#1#3, M#1#4, and M#1#2.

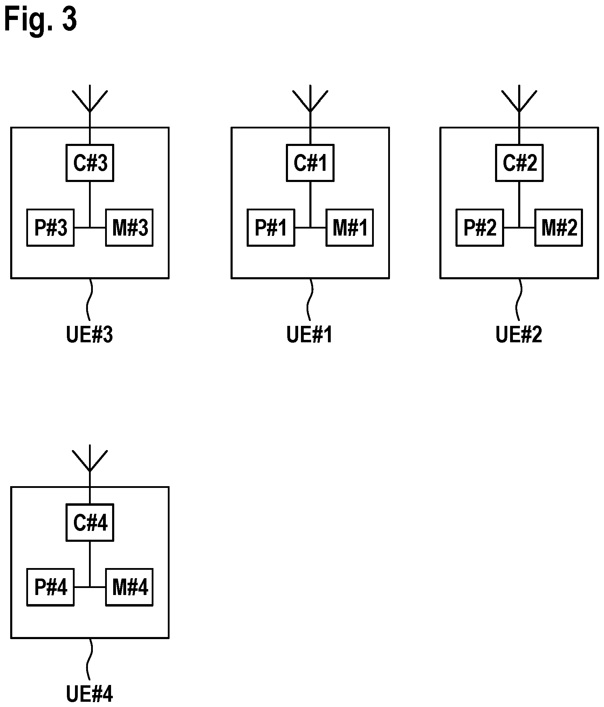

Figure 3 depicts in a schematic block diagram, that the radio terminals UE#1, UE#2, UE#3, UE#4 each comprise at least one processor P#1, P#2, P#3, P#4, at least one non-transitory memory M#1, M#2, M#3, M#4 including computer program code adapted to execute the schemes described above, and at least one radio communication module C#1, C#2, C#3, C#4 that comprises a respective antenna. The computer program code is adapted to cause the respective radio terminal UE#1-4 to execute the steps of this description.

## Claims

1. A server radio terminal (UE#1) of a sidelink positioning procedure (SLP), the server radio terminal (UE#1) comprising at least one processor; at least one memory including computer program code; and at least one radio communication module; the at least one processor, the at least one memory, the at least one computer program code, and the at least one radio communications module cause the server radio terminal (UE#1) to perform at least:
receiving, via the sidelink channel, and/or determining (104) at least one first sidelink measurement report (MES#1), wherein the first sidelink measurement report (MES#1) comprises first relative position information that indicates a relative position and a relative orientation of a first anchor radio terminal (UE#3) of the sidelink positioning procedure with respect to the server radio terminal (UE#1);
receiving (108), via a sidelink channel, a first absolute position information (AP#3) that indicates an absolute position and an absolute orientation of the first anchor radio terminal (UE#3);
receiving, via the sidelink channel, and/or determining (110) at least one second sidelink measurement report (MES#2), wherein the second sidelink measurement report (MES#2) comprises relative position information that indicates a relative position and a relative orientation of a second anchor radio terminal (UE#3) of the sidelink positioning procedure (SLP) with respect to the server radio terminal (UE#1); and
receiving (114), via the sidelink channel, a second absolute position information (AP#4) that indicates an absolute position and an absolute orientation of the second anchor radio terminal (UE#4) of the sidelink positioning procedure (SLP).

2. The server radio terminal (UE#1) according to claim 1, wherein the server radio terminal (UE#1) further performs:
transmitting (116), via the sidelink channel or an uplink channel, the first absolute position information (AP#3), the first relative position information of the first measurement report (MES#1), the second absolute position information (AP#4), and the second relative position information of the second measurement report (MES#2).

3. The server radio terminal (UE#1) according to claim 1 or 2, wherein the server radio terminal (UE#1) further performs:
determining (118) absolute position information (AP#1) comprising an absolute position and absolute orientation of the server radio terminal (UE#1) based on: the first absolute position information (AP#3), the first relative position information of the first measurement report (MES#1), the second absolute position information (AP#4), and the second relative position information of the second measurement report (MES#2).

4. The server radio terminal (UE#1) according to one of the preceding claims, wherein the server radio terminal (UE#1) further performs:
receiving, via the sidelink channel, and/or determining (224) at least one third sidelink measurement report (MES#3), wherein the third sidelink measurement report (MES#3) comprises relative position information that indicates a relative position and a relative orientation of the server radio terminal (UE#1) with respect to a target radio terminal (UE#2) of the sidelink positioning procedure (SLP); and
determining (138) a third absolute position information (AP#2) that indicates an absolute position and an absolute orientation of the target radio terminal (UE#2) participating in the sidelink positioning procedure (SLP) based on the determined absolution position information (AP#1) of the server radio terminal (UE#1) and based on the third sidelink measurement report (M ES#3).

5. The server radio terminal (UE#1) according to one of the preceding claims, wherein the server radio terminal (UE#1) further performs:
receiving (130, 134), via the sidelink channel, at least one further measurement report (MES#4-5), wherein at least one further measurement report (MES#4-5) comprises relative position information that indicates a relative position and a relative orientation of one of the anchor radio terminals (UE#3, UE#4), which are able to provide their absolute position, with respect to the target radio terminal (UE#2) of the sidelink positioning procedure (SLP).

6. The server radio terminal (UE#1) according to one of the preceding claims, wherein the server radio terminal (UE#1) further performs:
receiving (136), via the sidelink channel, at least one motion information (MOT#2) indicating a motion parameter of the target radio terminal (UE#2); and
wherein the determining (138) of the absolute position information (AP#2) of the target radio terminal (UE#2) is further based on the received at least one motion information (MOT#3).

7. A method to operate a server radio terminal (UE#1) of a sidelink positioning procedure (SLP), the method comprising:
receiving, via the sidelink channel, and/or determining (104) at least one first sidelink measurement report (MES#1), wherein the first sidelink measurement report (MES#1) comprises first relative position information that indicates a relative position and a relative orientation of a first anchor radio terminal (UE#3) of the sidelink positioning procedure with respect to the server radio terminal (UE#1);
receiving (108), via a sidelink channel, a first absolute position information (AP#3) that indicates an absolute position and an absolute orientation of the first anchor radio terminal (UE#3);
receiving, via the sidelink channel, and/or determining (110) at least one second sidelink measurement report (MES#2), wherein the second sidelink measurement report (MES#2) comprises relative position information that indicates a relative position and a relative orientation of a second anchor radio terminal (UE#3) of the sidelink positioning procedure (SLP) with respect to the server radio terminal (UE#1); and
receiving (114), via the sidelink channel, a second absolute position information (AP#4) that indicates an absolute position and an absolute orientation of the second anchor radio terminal (UE#4) of the sidelink positioning procedure (SLP).

8. An anchor radio terminal (UE#3-4) of a sidelink positioning procedure (SLP), the anchor radio terminal (UE#3-4) comprising at least one processor; at least one memory including computer program code; and at least one radio communication module; the at least one processor, the at least one memory, the at least one computer program code, and the at least one radio communications module cause the anchor radio terminal (UE#3-4) to perform at least:
determining and transmitting (104, 110), via a sidelink channel, at least one sidelink measurement report (MES#1-2), wherein the sidelink measurement report (MES#1-2) comprises relative position information that indicates a relative position and a relative orientation of the anchor radio terminal (UE#3-4) of the sidelink positioning procedure with respect to a server radio terminal (UE#1);
a-priori knowing (302, 402) absolute position information (AP#3-4) that indicates an absolute position and an absolute orientation of the anchor radio terminal (UE#3-4); and
transmitting (208, 314), via a sidelink channel, the absolute position information (AP#3-4) towards the server radio terminal (UE#1) of the sidelink positioning procedure (SLP).

9. The anchor radio terminal (UE#3-4) according to claim 8, wherein the anchor radio terminal (UE#3-4) further performs:
receiving (306, 412), via the sidelink channel, an absolute position provision request (AR#3-4);
wherein the absolute position information (AP#3-4) is transmitted as a response to the received absolute position provision request (AR#3-4).

10. A method to operate an anchor radio terminal (UE#3-4) of a sidelink positioning procedure (SLP), the method comprising:
determining and transmitting (104, 110), via a sidelink channel, at least one sidelink measurement report (MES#1-2), wherein the sidelink measurement report (MES#1-2) comprises relative position information that indicates a relative position and a relative orientation of the anchor radio terminal (UE#3-4) of the sidelink positioning procedure with respect to a server radio terminal (UE#1);
a-priori knowing (302, 402) absolute position information (AP#3-4) that indicates an absolute position and an absolute orientation of the anchor radio terminal (UE#3-4); and
transmitting (208, 314), via a sidelink channel, the absolute position information (AP#3-4) towards the server radio terminal (UE#1) of the sidelink positioning procedure (SLP).

11. A target radio terminal (UE#2) of a sidelink positioning procedure (SLP), the target radio terminal (UE#2) comprising at least one processor; at least one memory including computer program code; and at least one radio communication module; the at least one processor, the at least one memory, the at least one computer program code, and the at least one radio communications module cause the target radio terminal (UE#2) to perform at least:
transmitting (236), via a sidelink channel, towards a server radio terminal (UE#1) at least one motion information (MOT#2) indicating a motion parameter of the target radio terminal (UE#2).

12. A method to operate a target radio terminal (UE#2) of a sidelink positioning procedure (SLP), the method comprising:
transmitting (236), via a sidelink channel, towards a server radio terminal (UE#1) at least one motion information (MOT#2) indicating a motion parameter of the target radio terminal (UE#2).

13. A use of the method according to one of the claims 7, 10, and 12.

14. A computer program comprising instructions to cause
- the server radio terminal (UE#1) according to one of claims 1 to 6 to execute the steps of the method according to claim 7, and/or
- the anchor radio terminal (UE#3-4) according to claim 8 or 9 to execute the steps of the method according to claim 10, and/or
- the target radio terminal (UE#2) according to claim 11 to execute the steps of the method according to claim 12.

15. A computer-readable having stored thereon the computer program according to claim 14.
